(19) Europäisches Patentamt / European Patent Office / Office européen des brevets

(11) **EP 3 778 776 A1**

(12) **EUROPEAN PATENT APPLICATION**
published in accordance with Art. 153(4) EPC

(43) Date of publication:
**17.02.2021 Bulletin 2021/07**

(21) Application number: **19777046.4**

(22) Date of filing: **29.03.2019**

(51) Int Cl.:
**C08L 71/10** (2006.01)   **C08J 5/24** (2006.01)
**C08L 7/02** (2006.01)   **C08L 77/00** (2006.01)

(86) International application number:
**PCT/JP2019/014166**

(87) International publication number:
**WO 2019/189820 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2018  JP 2018069764
30.03.2018  JP 2018069873**

(71) Applicant: **NIPPON STEEL Chemical & Material
Co., Ltd.
Tokyo 103-0027 (JP)**

(72) Inventors:
• **TAKAHASHI, Hiroyuki
Tokyo 103-0027 (JP)**
• **ANDO, Hideki
Tokyo 103-0027 (JP)**

(74) Representative: **Vossius & Partner
Patentanwälte Rechtsanwälte mbB
Siebertstrasse 3
81675 München (DE)**

(54) **THERMOPLASTIC RESIN COMPOSITION, FIBER-REINFORCED-PLASTIC MOLDING MATERIAL, AND MOLDED ARTICLE**

(57)     Provided is a thermoplastic resin composition exhibiting excellent heat resistance and superior impregnability into a reinforcing-fiber substrate, and being used in fiber-reinforced-plastic molding materials. The thermoplastic resin composition, which is used as a matrix resin of a fiber-reinforced-plastic molding material, contains a phenoxy resin (A) and a polyamide resin (B). The mass ratio (A)/(B) of the phenoxy resin (A) and the polyamide resin (B) is 10/90 to 90/10. The melt viscosity of the resin composition in any temperature range from 160°C to 280°C is from 300 Pa·s to 3,000 Pa·s. A fiber-reinforced-plastic molding material has a reinforcing-fiber substrate, the surface of which is at least partially coated with the above thermoplastic resin composition and an interfacial shear strength of 30 MPa or higher at an interface with reinforcing fibers, as measured by a micro-droplet method.

EP 3 778 776 A1

**Description**

[Technical Field]

The present invention relates to a thermoplastic resin composition having favorable impregnability into a reinforcing-fiber substrate and favorable moldability, and to a fiber-reinforced-plastic molding material having that composition as a matrix resin, and moreover to a molded article of the fiber-reinforced-plastic molding material.

[Background Art]

Fiber-reinforced-plastics (FRPs), in particular carbon fiber-reinforced-plastics (CFRPs), are widely used as a lightweight, high-strength materials in fishing rods, tennis rackets, sports bicycles, automobiles, wind power generator blades and aircraft. Mainly thermosetting resins, such as epoxy resins, are used as matrix resins of such fiber-reinforced-plastics; however, thermosetting resins are problematic, for instance, in terms of achieving quicker processability and recyclability after use.

Among resin materials, by contrast, thermoplastic resins melt and solidify depending on the temperature, and accordingly can be processed more quickly; moreover, in the case of thermoplastic resins, carbon fibers and the matrix resin separate comparatively easily from the molded article, and the resulting fiber-reinforced molded article is easily further processed into another molded article after having been pulverized. Thermoplastic resins are, therefore, highly recyclable, and are thus being studied as materials that allow solving the problems of thermosetting resins.

A problem encountered when using thermoplastic resins as a matrix resin of FRPs is that thermoplastic resins generally exhibit high melting points and high melt viscosity, and hence thermoplastic resins do not readily impregnate carbon fiber substrates. This is conspicuous in cases where high-performance engineering plastics are used, such as polyamide resins.

Therefore methods have been addressed, for instance as disclosed in PTL 1, wherein a reinforcing-fiber substrate is powder-coated with a powdery thermoplastic resin in accordance with a fluidized bed method. Addition or incorporation of another resin, for instance, a phenoxy resin to a polyamide resin has also been studied for materials for injection molding (PTL 2 to 6).

In the method disclosed in PTL 1, a reinforcing-fiber substrate is powder-coated with a thermoplastic resin powder in accordance with a fluidized bed method, but the powder-applied resin has to be essentially impregnated in the reinforcing-fiber substrate beforehand to a certain degree by subsequently implementing a calendaring process, thus, the impregnability of the matrix resin is insufficient in a state after powder coating.

PTL 2 describes a resin composition resulting from adding 0.1 to 10 parts by weight of an epoxy compound having a number-average molecular weight of 10,000 or less, as a matrix resin, to a semi-aromatic polyamide resin. The high melt viscosity of the resin is not problematic in pelletization of the resin with short reinforcing fibers in a kneader, but the reinforcing fibers do break in a case where a woven fabric-like substrate or a unidirectional reinforcing-fiber substrate made up of continuous fibers is utilized, on account of the significant shear that is applied for the purpose of resin impregnation, and thus the molded article may fail to exhibit sufficient mechanical strength.

Although the mixtures of polyamide resins and phenoxy resins disclosed in PTL 3 to 6 are premised for a use as materials for injection molding, no consideration is however given to the impregnability of the resins into woven fabric-like substrates or unidirectional reinforcing-fiber substrates made up of continuous fibers.

[Citation List]

[Patent Literature]

[PTL 1] Japanese Translation of PCT Application No. 2017-507045
[PTL 2] Japanese Patent Application Publication No. 2015-129271
[PTL 3] Japanese Patent Application Publication No. 2006-321951
[PTL 4] Japanese Patent Application Publication No. H 04-11654
[PTL 5] Japanese Patent Application Publication No. H 03-237160
[PTL 6] Japanese Patent Application Publication No. S 63-202655

[Summary of Invention]

It is an object of the present invention to provide a thermoplastic resin composition exhibiting favorable impregnation into a reinforcing-fiber substrate and allowing easy heat molding, and to provide a fiber-reinforced-plastic molding material imparting superior heat resistance to a molded article made of the molding material and exhibiting high adhesiveness to a different material , and moreover to provide a fiber-reinforced-plastic molded article exhibiting heat resistance and superior mechanical characteristics such as impact resistance.

As a result of diligent research aimed at solving the above problems, tie inventors found that the problem of the present invention can be solved by a thermoplastic resin composition in which specific resins are combined, also in a case where a fibrous substrate has continuous fibers or is a woven fabric-like substrate, and perfected the present invention on the basis of that finding.

Specifically, the present invention is a thermoplastic resin composition which is used as a matrix resin of a fiber-reinforced-plastic molding material, and contains a phenoxy resin (A) and a polyamide resin (B). A mass ratio (A)/(B) of the phenoxy resin (A) and the polyamide resin (B) is 10/90 to 90/10. The melt viscosity of the resin composition in any temperature range from 160°C to 280°C is from 300 Pa·s to 3,000 Pa·s.

The present invention is also a fiber-reinforced-plastic molding material having a reinforcing-fiber substrate, the surface of which is at least partially coated with the above thermoplastic resin composition, and interfacial shear strength of 35 MPa or higher at an interface with reinforcing fibers, as measured by a micro-droplet method.

The present invention is also a fiber-reinforced-plastic molded article resulting from heat molding of the above fiber-reinforced-plastic molding material.

The thermoplastic resin composition of the present invention, which is used as a matrix resin of a fiber-reinforced-plastic molding material, is well impregnated into the reinforcing-fiber substrate, and accordingly defects such as voids do not readily occur in the interior of a resulting molded article into which the impregnated reinforcing-fiber substrate is made. As a result an effect is elicited whereby the mechanical characteristics of the molded article can be maintained satisfactorily. The fiber-reinforced-plastic molding material is characterized by being pliable, since the matrix resin of the molding material is made up of the thermoplastic resin composition, and can be conformed to various shapes. Moreover, the fiber-reinforced-plastic molding material exhibits excellent adhesiveness towards a different material. Furthermore, a molded article can be obtained that has high surface designability, is excellent in heat resistance, and exhibits low water absorption.

[Brief Description of Drawings]

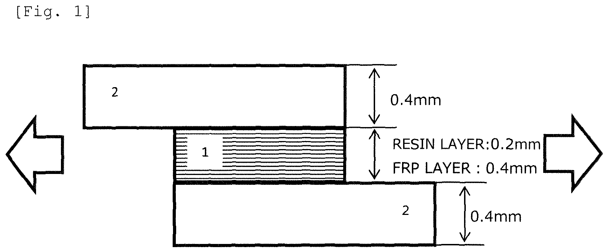

Fig. 1 is an explanatory diagram illustrating the configuration of a shear test sample.

[Description of Embodiments]

The present invention will be explained next in detail.

The thermoplastic resin composition of the present invention is used as a matrix resin of a fiber-reinforced-plastic molding material (hereafter also referred to as FRP molding material), and contains a phenoxy resin (A) and a polyamide resin (B). The thermoplastic resin composition of the present invention is a matrix resin in a fiber-reinforced-plastic molded article (hereafter also referred to as FRP), and thus may also be referred to as matrix resin composition. The term "resin composition" in the present invention encompasses both a simple mixture resulting from mixing, using a blender such as a Henschel mixer or a rocking mixer, a granular material or finely pulverized powdery material of the phenoxy resin (A) and the polyamide resin (B), and also a molten mixture resulting from melt mixing of the phenoxy resin (A) and the polyamide resin (B), using a kneader or the like; in consequence, the term "resin composition" encompasses conceptually, as a matter of course, also a product resulting from fine pulverization of such a molten mixture.

The phenoxy resin is a thermoplastic resin obtained as a result of a condensation reaction between a dihydric phenol compound and epihalohydrin, or a polyaddition reaction of a dihydric phenol compound and a bifunctional epoxy resin; the phenoxy resin can be obtained herein in accordance with a conventionally known method, in solution or without a solvent. The average molecular weight of the resin, as mass-average molecular weight (Mw), is ordinarily 10,000 to 200,000, but is preferably 20,000 to 100,000, and more preferably 30,000 to 80,000. When Mw is excessively low, the strength of the molded article is prone to be impaired, whereas an excessively high Mw is likely to result in poorer workability and processability. Herein Mw is a value obtained through measurement by gel permeation chromatography (GPC), and converted on the basis of a standard polystyrene calibration curve.

The hydroxyl equivalent (g/eq) of the phenoxy resin is ordinarily 50 to 1,000, but is preferably 50 to 750, and particularly preferably 50 to 500. An excessively low hydroxyl equivalent is problematic since in that case a water absorption rate rises, as a result of an increase in hydroxyl groups, and mechanical properties become poorer thereby. When the hydroxyl equivalent is excessively high, there are few hydroxyl groups and hence wettability with the reinforcing-fiber substrate, in particular with carbon fibers, decreases, while adhesiveness with the polyamide drops as well. The term hydroxyl equivalent in the present specification refers to secondary hydroxyl equivalent.

The glass transition temperature (Tg) of the phenoxy resin is appropriately 70°C to 160°C, preferably 75°C to 150°C. Moldability improves when the glass transition temperature is lower than 75°C, but in that case the flowability of the resin is difficult to control, while powder storage stability and preform tackiness constitute additional problems. When the glass transition temperature is higher than 160°C, melt viscosity rises, and moldability and inter-fiber filling properties become poorer, so that press molding at a higher temperature becomes necessary as a result. The glass transition temperature of the phenoxy resin is a numerical value worked out on the basis of a peak value of a second scan, in a measurement over a range of 20°C to 280°C under temperature rise conditions of 10°C/minute, using a differential scanning calorimeter.

The phenoxy resin is not particularly limited so long as it satisfies the above physical properties; examples include for instance a bisphenol A-type phenoxy resin (for instance Phenotohto YP-50, YP-50S and YP-55U by NIPPON STEEL Chemical & Material Co., Ltd.), a bisphenol F-type phenoxy resin (for instance Phenotohto FX-316 by NIPPON STEEL Chemical & Material Co., Ltd.), a bisphenol A and bisphenol F copolymer-type phenoxy resin (for instance Phenotohto YP-70 and ZX1356-2 by NIPPON STEEL Chemical & Material Co., Ltd.), and a special phenoxy resin (for instance Phenotohto YPB-43C and FX293 by NIPPON STEEL Chemical & Material Co., Ltd.). These can be used singly or in combinations of two or more types thereof, as appropriate, with preferred characteristics in mind.

Preferably, the phenoxy resin is solid at normal temperature, and exhibits a melt viscosity of 1,000 Pa·s or less at a temperature of 250°C or above. More preferably, the melt viscosity is 500 Pa·s or less, and yet more preferably 300 Pa·s or less. Preferably, the lower limit of the melt viscosity is 10 Pa·s or more, in any of the above temperature ranges. More preferably, the lower limit is 50 Pa·s or more.

The thermoplastic resin composition of the present invention contains a polyamide resin (B) together with the phenoxy resin (A). Incorporating a polyamide resin allows improving impregnability of the resin composition, into the reinforcing-fiber substrate, by lowering the melt viscosity of the resin composition, and allows increasing the heat resistance, of the resulting molded article, derived from the matrix resin. The mechanism underlying the improvement in heat resistance is not clear, but it is speculated that the phenoxy resin and the polyamide resin have good compatibility by virtue of the fact that both resins have polar groups, and thus an effect is brought about derived from incorporating of the resins. In terms of increasing heat resistance, in particular, the Tg of the polyamide resin can significantly exceed the Tg of the phenoxy resin, and thus applications can be developed in which yet higher heat resistance is demanded, for instance automobile materials and aerospace materials.

Polyamide resins are herein thermoplastic resins having a main chain made up of repeated amide bonds, and are obtained for instance through ring-opening polymerization of lactams, co-condensation polymerization of lactams, and dehydration condensation of diamines and dicarboxylic acids.

Examples of starting lactams include ε-caprolactam, undecane lactam and lauryl lactam.

Examples of starting diamines include aliphatic diamines such as hexamethylenediamine, nonanediamine and methylpentadiamine; alicyclic diamines such as cyclohexanediamine, methylcyclohexanediamine, isophorodiamine, norbornanedimethylamine and tricyclodecanedimethyldiamine; and aromatic diamines such as p-phenylenediamine, m-phenylenediamine, p-xylylenediamine, m-xylylenediamine, 4,4'-diaminodiphenylmethane, 4,4'-diaminodiphenylsulfone and 4,4'-diaminodiphenyl ether. Examples of the above dicarboxylic acid include aliphatic dicarboxylic acids such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid and suberic acid; alicyclic dicarboxylic acids such as 1,3-cyclopentanedicarboxylic acid and 1,4-cyclohexanedicarboxylic acid; and aromatic dicarboxylic acids such as terephthalic acid, isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic, diphenic acid, 4,4'-oxydibenzoic acid, diphenylmethane-4,4'-dicarboxylic acid, diphenylsulfone-4,4'-dicarboxylic acid and 4,4'-biphenyl dicarboxylic acid.

The polyamide resin may be a fully aliphatic polyamide resin, also referred to as nylon, the main chain of which is made up of an aliphatic skeleton (for instance nylon 6, nylon 11, nylon 12, nylon 66 and nylon 610), a semi-aliphatic polyamide resin, a semi-aromatic polyamide resin containing an aromatic in the main chain (for instance nylon 6I, nylon 6T, nylon 9T, nylon MXD and nylon M5T), or a fully aromatic polyamide resins referred to as aramids, the main chain of which is made up of an aromatic skeleton alone (Kevlar and Nomex (by DU PONT-TORAY CO., LTD.), and Twaron and Conex (by TEIJIN LIMITED)) All these can be used in the fiber-reinforced-plastic molding material of the present invention, but it is preferable to use a fully aliphatic polyamide resin or semi-aliphatic (semi-aromatic) polyamide resin. More preferably, the fiber-reinforced-plastic molding material is a fully aliphatic polyamide resin, and most preferably, is a fully aliphatic polyamide resin, referred to as nylon 6, obtained through ring-opening polymerization of ε-caprolactam.

The polyamide resin has a melting point of 200°C to 290°C, and a melt viscosity of 10 to 1,000 Pa·s at a temperature of 250°C or above. Preferably, the melting point is 210°C to 280°C, and the melt viscosity at a temperature of 250°C or above is 100 to 500 Pa·s. Fully aliphatic and semi-aromatic polyamide resins have comparatively low melt viscosity, and allow keeping low the melt viscosity of the matrix resin. When the melt viscosity of the polyamide resin exceeds 1,000 Pa·s, the fillability of the matrix resin into the reinforcing-fiber substrate becomes poorer, and defects such as voids are prone to occur, which detracts from the homogeneity of the obtained fiber-reinforced-plastic molded article. When by contrast the melt viscosity of the polyamide resin is lower than 10 Pa·s, the resin exhibits excessive flowability, which may result in small voids or drops in thickness precision, derived from resin insufficiency, at the time of molding. The melt viscosity of the polyamide resin is particularly preferably 100 to 300 Pa·s.

The weight-average molecular weight of the polyamide resin is preferably 10,000 or higher, and more preferably 25,000 or higher. By using a polyamide resin having a weight-average molecular weight of 10,000 or higher, good mechanical strength in the molded article can be ensured, and the occurrence of problems such as resin insufficiency and drops in the thickness precision of the molded article, derived from excessive flowability, can be suppressed.

The thermoplastic resin composition of the present invention has melt viscosity in the range of 300 Pa·s to 3,000 Pa·s, in any temperature range from 160°C to 280°C.

The term melt viscosity is the viscosity of the resin in a molten state, measured by a rheometer, and constitutes an index of viscosity denoting the impregnability of the resin composition into a reinforcing-fiber substrate. When the melt viscosity is excessively high, high pressure and temperature are required in order to impregnate the resin into the reinforcing-fiber substrate, in the production of an FRP molding material or FRP molded article, and thus the resin may undergo thermal degradation and reinforcing fibers may break. In a case where melt viscosity is too low, the flowability of the resin is excessively high, and the resin flows over the surface of the reinforcing-fiber substrate when under pressure, so that the interior of the substrate is not impregnated readily with the resin. If the melt viscosity of the resin composition lies in the range of 300 to 3,000 Pa·s within any temperature range from 160°C to 280°C, the reinforcing-fiber substrate can be impregnated with the resin, without any problems such as those described above.

The thermoplastic resin composition of the present invention containing the phenoxy resin (A) and polyamide resin (B) is solid at normal temperature, and as described above, the melt viscosity of the thermoplastic resin composition must be 300 Pa·s to 3,000 Pa·s in any temperature range from 160°C to 280°C. The melt viscosity is preferably 300 Pa·s to 2,000 Pa·s, and more preferably 350 Pa·s to 1,500 Pa·s.

Preferably, the resin composition of the present invention has a viscosity curve slope, measured using a flow tester at a temperature near the melting point of the polyamide resin mixed with the phenoxy resin, that is closer to 0 (zero) than -3,000 Pa·s·min$^{-1}$. The melt viscosity slope is the rate of change of the viscosity of the resin melt; herein problems are likelier to occur, as the slope becomes greater, in that for instance the resin composition that constitutes the matrix resin flows readily out of the system, before impregnating the reinforcing-fiber substrate, at the time of press molding by heat pressing, since the resin flows all at once upon melting, and also in that mechanical characteristics worsen on account of resin insufficiency, while adjustment of plate thickness and fiber deposition content becomes more difficult. The melt viscosity slope is preferably -100 to -2,500 Pa·s·min$^{-1}$, and more preferably -100 to -2,000 Pa·s·min$^{-1}$.

Preferably, the melt flow rate (MFR) of the resin composition of the present invention is 35 g/10 min or less. Herein MFR is an index of the flowability of the resin composition. When he numerical value of MFR is large, molten resin flows readily when pressed, and hence the resin that impregnates the reinforcing-fiber substrate flows out of the substrate; In this case as well, problems are prone to occur in that for instance mechanical characteristics are impaired on account of resin insufficiency, and plate thickness and fiber deposition content become difficult to adjust. Preferably, MFR is 10 to 30 g/10 min, and more preferably 12 to 30 g/10 min.

In the resin composition of the present invention, preferably, there is adjusted not only the melt viscosity of a matrix resin composition but also the rate (slope) of viscosity change, and the melt flow rate, so as to lie within a predetermined range, as described above. An FRP molded article exhibiting good mechanical characteristics and in which a reinforcing-fiber substrate is impregnated with a matrix resin, without outflow of the resin, can be thus obtained with good productivity even without relying on a special molding method or complex processing conditions, also in pressure processing by for instance heat pressing, for obtaining an FRP molded article.

Preferably, the melt tension of the thermoplastic resin composition of the present invention is 2 mN or higher. More preferably, the melt tension is 5 mN or higher. Melt tension is the tension generated when a heated/melted resin is pulled, and is used, as an index of elasticity, for primary evaluation of molding processability such as spinnability, film formability and blow moldability. The matrix resin of a fiber-reinforced-plastic material is adhered/applied, to the reinforcing-fiber substrate, in a powder, fiber or film state, or is molded, in accordance with various molding methods, together with a short-fiber reinforced material; accordingly, melt tension should be as high as possible, since low melt tension translates into a significant reduction in resin processability.

In the thermoplastic resin composition of the present invention, the phenoxy resin (A) and the polyamide resin (B) are incorporated at a proportion of 90/10 to 20/80, according to a compounding ratio represented by (A)/(B). The compounding ratio (A)/(B) is preferably 90/10 to 30/70, more preferably 90/10 to 40/60, yet more preferably 90/10 to 50/50, and particularly preferably 85/15 to 60/40.

When the compounding ratio (A)/(B) exceeds 90/10, the effect elicited by incorporating the polyamide resin, namely improvement of for instance heat resistance and mechanical strength, is no longer observed. When the compounding ratio (A)/(B) is lower than 10/90, improvement of the impregnability into the reinforcing-fiber substrate, elicited through incorporation of the phenoxy resin, is no longer observed, and accordingly impregnation of the reinforcing-fiber substrate becomes difficult.

The phenoxy resin (A) being one of the resin materials that makes up the matrix resin of the fiber-reinforced-plastic molding material of the present invention has good affinity with reinforcing fibers (in particular glass fibers and carbon fibers), thanks to the presence of hydroxyl groups in the side chain of the phenoxy resin (A). Accordingly, the phenoxy resin (A) can penetrate very easily into the interior of the fiber bundles of the reinforcing-fiber substrate, through pressing in a state where the resin is adhered in a powder state to the reinforcing-fiber substrate. Further, the phenoxy resin (A) is an amorphous polymer, and exhibits transparency, such that and a molded article of high surface designability is obtained after molding. By contrast, the polyamide resin (B) being the other resin material that makes up the matrix resin is a crystalline polymer, but of high melting point and high melt viscosity, and accordingly exhibits poor impregnability into the reinforcing-fiber substrate; however, the substrate impregnability of the polyamide resin (B) can be significantly improved by using the polyamide resin (B) in the form of a fine powder. In addition, the polyamide resin (B) has ordinarily high heat resistance, and good mechanical strength for instance in terms of impact resistance.

The phenoxy resin (A) and the polyamide resin (B) do not become a homogeneous mixture, through inter-dissolution, even when finely pulverized, mixed with each other, and melted. However, the phenoxy resin has polarity derived from hydroxyl groups present therein, while the polyamide resin has polarity derived from amide bonds, and accordingly it is estimated that the phenoxy resin and the polyamide resin take on a sea-island structure or co-continuous structure in a state where the resins exhibits some degree of affinity with each other. The structure of these matrix resins can be adjusted arbitrarily on the basis of the formulation ratio of the phenoxy resin (A) and the polyamide resin (B). To design an FRP molding material, therefore, the physical properties of the FRP molded article can be adjusted arbitrarily in accordance with the performance that is demanded, by exploiting the good processability and designability derived from the phenoxy resin, and impact resistance and heat resistance derived from the polyamide resin.

A flame retardant and a flame retardant aid may be incorporated into the thermoplastic resin composition of the present invention, for the purpose of enhancing flame retardance. Examples of these flame retardants include inorganic flame retardants such as calcium hydroxide, organic and inorganic phosphorus-based flame retardants such as ammonium phosphates and phosphate ester compounds, nitrogen-containing flame retardants such as triazine compounds, and bromine-containing flame retardants such as brominated phenoxy resins. Among the foregoing, brominated phenoxy resins and phosphorus-containing phenoxy resins can be used as a matrix resin doubling as a flame retardant. The flame retardant is solid at normal temperature, and thus the flame retardant has preferably herein no sublimation properties. The compounding amount of the flame retardant (and flame retardant aid) is selected as appropriate depending on the type of the flame retardant, and the desired degree of flame retardance, but preferably the flame retardant is incorporated in an amount, within a range of about 0.01 to 50 parts by weight with respect to 100 parts by weight of the matrix resin, so long as adhesion and impregnability of the matrix resin, and physical properties of the molded article, are not impaired.

Other thermoplastic resins and thermosetting resins (for instance polyvinylidene chloride resin, natural rubber, synthetic rubber, epoxy compounds and the like) may be incorporated into the thermoplastic resin composition of the present invention, in amounts such that the effect of the present invention is not impaired.

Various inorganic fillers, carbon fillers such as carbon black and carbon nanotubes, extender pigments, colorants, antioxidants, ultraviolet inhibitors and the like can be incorporated into the thermoplastic resin composition of the present invention, so long as the melt viscosity of the matrix resin composition at 160°C to 250°C does not exceed 3,000 Pa·s.

The above resin composition is a mixture containing a phenoxy resin and a polyamide resin, but may contain other resins and additives such as those described above, as needed. However, the solid fraction that does not melt or dissolve together with the resin composition, for instance an inorganic filler, is not treated herein as a component that makes up the resin composition. In a case where the resin composition contains components other than the phenoxy resin and the polyamide resin, the proportion of these other components may be 50 wt% or less, preferably 20 wt% or less. It suffices that the resin composition in this case satisfies the above melt viscosity overall.

The thermoplastic resin composition of the present invention constitutes a matrix resin of an FRP molding material, and may be adhered to or impregnated into the reinforcing-fiber substrate in accordance with a known method; however, a method is preferably resorted to in which no solvent is used. Examples of such a method include methods (a film stacking method and a press-fit method) in which a resin composition made into a film is melted and caused to impregnate a reinforcing-fiber substrate, a method (commingling method) in which continuous fibers spun out of a resin composition are mixed with reinforcing fibers, and methods (a powder coating method or a powder application method) in which a powdered resin composition is sprayed/applied onto a reinforcing-fiber substrate. More preferred among foregoing are a commingling method and a powder coating method, since these allow obtaining an FRP molding material in which internal bubbles are not prone to occur, even in high layer-count build-ups, by virtue of the fact that the molding material exhibits flexibility and air permeability, and that reinforcing fibers are unlikely to break at the time of production of the molding material.

Hereafter preferred implementations of a film stacking method (press-fit method), a powder coating method (powder application method) and a commingling method will be explained as the method for producing the FRP molding material.

In the film stack method, a resin composition that constitutes a matrix resin is formed into a film, and the resin composition, in a molten state, is then press-fitted into a reinforcing-fiber substrate using a press machine heated at or above the melting point of the resin composition, to yield the FRP molding material as a result.

The form of the reinforcing-fiber substrate used in the film stack method may be either a woven fabric or a unidirectional reinforcing-fiber substrate (UD material), but preferably the reinforcing-fiber substrate is a substrate having undergone a fiber opening treatment, and is most preferably a UD material that exhibits a lower resistance at the time of press-fitting than that of woven fabrics, and is not prone to reinforcing fiber breakage. The production method of the resin film is not particularly limited, and there can be used a film obtained in accordance with a conventionally known production method such as a T-die method or an inflation method.

The press machine that can be used may be for instance a general flat plate heat press machine, a roll press or a belt press; an appropriate machine may be selected herein depending on the type of the reinforcing-fiber substrate and depending on the melt viscosity of the resin composition.

In the FRP molding material obtained in accordance with the film stacking method, the resin composition is preferably completely impregnated into the reinforcing-fiber substrate, but impregnation may be discontinued in a semi-impregnation state, the reinforcing-fiber substrate being then completely impregnated into the reinforcing-fiber substrate at the time of FRP molding in a subsequent process.

In the powder coating method, a resin composition fine powder having been finely pulverized to a particle size of 150 $\mu$m or less, preferably of 10 to 100 $\mu$m, using a centrifugal dryer/mill or the like, is caused to be deposited/adhered to the reinforcing-fiber substrate, and is melted by heat.

Powder coating includes a method for simply spraying/depositing a resin composition fine powder onto the reinforcing-fiber substrate, a fluidized coating method using a fluidized bed, an electrostatic coating method relying on electrostatic fields, as well as methods that involve immersing a substrate in a resin composition emulsion, using an alcohol or the like as a dispersion medium. These powder coating methods can all be used in the present invention, but preferably a fluidized bed method or an electrostatic coating method is resorted to, in terms of enabling producing an FRP molding material in a dry process.

The fine powder of a powder-applied resin composition is fixed to the reinforcing-fiber substrate, by heat melting, so that the fine powder does not slough off the substrate. This heat melting affords higher adhesion to the surface of the reinforcing-fiber substrate, through melting of the matrix resin of the substrate, while preventing slough-off of the applied resin powder during handling of the FRP molding material in subsequent processes. At this stage, however, the matrix resin composition is unevenly distributed towards the surface of the reinforcing-fiber substrate, and does not pervade throughout the interior of the reinforcing-fiber substrate, as in the case of a molded article after heat and pressure molding.

In order to elicit heat fusion of the matrix resin, a thermal treatment may be carried out at a temperature of 150°C to 240°C for a short time of about one to two minutes; preferably, the thermal treatment is carried out a temperature of 160°C to 230°C, and more preferably at a temperature of 180°C to 220°C. When the melting temperature exceeds an upper limit, excessive melting may result in formation of droplets that may spread over the surface of the substrate, and the air permeability of the FRP molding material, which is a characterizing feature of powder coating method, may fail to be achieved. When by contrast the temperature drops below the lower limit, heat fusion becomes insufficient, and the fine powder of the matrix resin may detach or slough off during handling of the FRP molding material.

The form of the reinforcing-fiber substrate is not particularly limited, and for instance a unidirectional material, cloth such as plain weave or twill weave, three-dimensional cloth, a chopped strand mat, tow made up of several thousand or more filaments, or a non-woven fabric, can be used as the reinforcing-fiber substrate. These reinforcing-fiber substrates can be used as single types, or can be used concomitantly as two or more types.

At the time of powder coating a reinforcing-fiber substrate is preferably used that has undergone a fiber opening treatment. By having undergone a fiber opening treatment, the matrix resin impregnates more readily the interior of the reinforcing-fiber substrate at the time of powder coating and subsequent molding processing, and accordingly the physical properties of the molded article can be expected to be yet higher.

In the commingling method, resin fibers formed for instance through melt spinning of a resin composition that constitutes the matrix resin are made into cloth by being woven together with reinforcing fibers, in a loom.

The commingling method is a method in which impregnability of reinforcing fibers with a thermoplastic resin is facilitated by arranging beforehand resin fibers between reinforcing fibers, may adopt various forms, for instance a form in which twisted yarns or braids of reinforcing fibers and resin fibers are made into a woven fabric, or in which reinforcing fibers and resin fibers are made into a woven fabric, such as plain weave or twill weave, by using the reinforcing fibers and the resin fibers as warp, or weft, or both.

Among the three types of production method of an FRP molding material described above, the commingling method and the powder coating method are more preferred, since these allow obtaining an FRP molding material in which internal bubbles are not prone to occur, even in high layer-count build-ups, by virtue of the fact that the material exhibits flexibility and air permeability, and the reinforcing fibers are unlikelier to break at the time of production of the molding material.

The coverage (resin proportion: RC) of the matrix resin in the FRP molding material resulting from using the thermoplastic resin composition of the present invention is 20% to 50%, preferably 25% to 45%, and more preferably 25% to 40%, in a ratio by weight. When RC exceeds 50%, the mechanical properties of the FRP become poorer for instance in terms of tensile and flexural modulus, while when RC drops below 10%, resin coverage is very scant, and accordingly impregnation of the matrix resin into the interior of the substrate becomes insufficient, which gives rise to the concern of impaired thermophysical properties and mechanical properties.

In the FRP molding material that utilizes the thermoplastic resin composition of the present invention, at least a part of the surface of the reinforcing-fiber substrate is coated with a thermoplastic resin composition, and exhibits an interfacial shear strength with reinforcing fibers, as measured in accordance with a micro-droplet method, of 35 MPa or higher.

The interfacial shear strength between a matrix resin composition and reinforcing fibers, as measured in accordance with the micro-droplet method, is an index of adhesiveness between a resin composition and reinforcing fibers; when the interfacial shear strength is low, the reinforcing fibers and the resin have poor affinity,, even when an FRP molded article has been obtained, and the reinforcing-fiber substrate is not readily impregnated with the resin at the time of processing, and the matrix resin peels off easily from the reinforcing fibers, on account of external forces. The mechanical strength decreases significantly as a result, which is problematic. The interfacial shear strength between the resin composition and the reinforcing fibers needs to be 35 MPa or higher, preferably 38 MPa or higher, and more preferably 40 MPa.

The fibers that make up the reinforcing-fiber substrate are at least one type of fibers selected from the group consisting of carbon fibers, boron fibers, silicon carbide fibers, glass fibers and aramid fibers, and may include two or more types of fibers. The fibers are preferably carbon fibers, which boast high strength and good thermal conductivity. More preferred herein are in particular pitch-based carbon fibers, since these have not only high strength, but also allow for fast diffusion of generated heat.

The form of the reinforcing-fiber substrate is not particularly limited, and for instance a unidirectional material, cloth such as plain weave or twill weave, three-dimensional cloth, a chopped strand mat, tow made up of several thousand or more filaments, or a non-woven fabric, can be used as the reinforcing-fiber substrate. In particular the thermoplastic resin composition of the present invention affords good impregnation also with fiber substrates of continuous form or of woven fabric form. These reinforcing-fiber substrates can be used as single types, or can be used concomitantly as two or more types. At least part of the reinforcing-fiber substrate of the FRP molding material of the present invention is covered by the above thermoplastic resin composition. In a case where the reinforcing-fiber substrate is coated in accordance with a powder coating method it is preferable to utilize a reinforcing-fiber substrate having undergone a fiber opening treatment. By having undergone a fiber opening treatment, the matrix resin impregnates more readily the interior of the reinforcing-fiber substrate at the time of powder coating and subsequent molding processing, and accordingly the physical properties of the molded article can be expected to be yet higher.

Preferable reinforcing fibers are herein those having a sizing material (a sizing agent), a coupling agent or the like adhered to the surface of the fibers, since the wettability of the matrix resin to the reinforcing fibers and handleability can be improved in that case. Examples of sizing agents include maleic anhydride-based compounds, urethane-based compounds, acrylic compounds, epoxy-based compounds, phenol-based compounds or derivatives of these compounds; sizing agents containing epoxy-based compounds can be preferably used among the foregoing. Examples of coupling agents include amino-based, epoxy-based, chloro-based, mercapto-based and cationic-based silane coupling agents; amino-based silane coupling agents can be preferably used herein.

The total content of the sizing material plus the coupling agent is 0.1 to 10 parts by weight, and more preferably 0.5 to 6 parts by weight, with respect to 100 parts by weight of the reinforcing fibers. Wettability with the matrix resin and handleability are yet better when the above content is 0.1 to 10 wt%. More preferably, the above content is 0.5 to 6 wt%.

An FRP molded article can be conveniently produced by heating and pressing an FRP molding material that utilizes the thermoplastic resin composition of the present invention, singly or laid up as a plurality of layers. Specifically, press molding by heat pressing makes it possible to simultaneously accomplish shaping and total impregnation of the reinforcing-fiber substrate with the matrix resin. Molding using the FRP molding material can be carried out by selecting various molding methods depending on the size and shape of the intended FRP molded article, so long as the method involves heat and pressure molding, for instance a heat press molding method such as autoclave molding and hot press molding using a molding mold.

The molding temperature involved in heat and pressure molding is for instance 160°C to 260°C, preferably 180°C to 250°C, and more preferably 180°C to 240°C. When the molding temperature exceeds an upper limit temperature, excessive heat is applied beyond necessity, which may give rise to excessive resin outflow and thermal degradation; moreover, the molding time (cycle time) becomes longer, since warming and cooling take some time, and productivity is accordingly poor. On the other hand, a molding temperature below the lower limit temperature translates into poor impregnability of the matrix resin into the reinforcing-fiber substrate, since the melt viscosity of the matrix resin is high in such a case. The molding time can be ordinarily set to 30 to 60 minutes.

Examples

The present invention will be explained next in further detail with reference to examples, but the present invention is not limited to the disclosure in the examples. Tests and measuring methods of various physical properties in the examples and comparative examples below are as follows.

[Average particle size (D50)]

Average particle size was measured in the form of the particle size at a volume-basis cumulative volume of 50%, using a laser diffraction/scattering particle size distribution measuring device (Microtrac MT3300EX, by NIKKISO CO., LTD.).

[Melt viscosity]

Melt viscosity at 30°C to 300°C was measured using a rheometer (by Anton Paar GmbH), in a 5 mm$^3$ sample sandwiched in parallel plates, under conditions that involved frequency: 1 Hz and load strain: 0.2% while the temperature was raised at 5°C/min.
Melt viscosity at 250°C is given in Table 1.

[Slope of melt viscosity curve]

Melt viscosity was measured using a raised-type Flowtester (CFT-100D by SHIMADZU CORPORATION), under conditions of load: 98 N, capillary diameter: 1 mm and capillary length: 10 mm, while the temperature of pellets charged into a cylinder was raised at 5°C/min. Then the value resulting from dividing the amount of change of melt viscosity by the measurement temperature range was taken as the slope of a melt viscosity curve.
The temperatures at which the slopes of the melt viscosity curves in examples and comparative examples were measured are given below

    Examples 1 to 5, Comparative examples 1 to 6: 226°C to 230°C
    Examples 6 to 8: 266°C to 270°C
    Examples 9 to 11: 246°C to 250°C

[Melt flow rate (MFR)]

Melt flow rate was measured in accordance with JIS K 7210: 1999 "Determination of the Melt Mass-Flow Rate (MFR) and the Melt Volume-Flow Rate (MVR) of Thermoplastics".
Measurement conditions of MFR in the examples and comparative examples are given below.

    Examples 1 to 5, Comparative examples 1 to 6: 250°C, 2.16 kgf
    Examples 6 to 8: 280°C, 2.16 kgf
    Examples 9 to 11: 260°C, 2.16 kgf

[Melt tension]

The melt tension of each sample was measured at an extrusion rate of 3 mm/min and a take-up speed of 200 m/min using a capillary rheometer (Capillograph 1D PMD-C, by Toyo Seiki Seisaku-sho, Ltd.).
Measurement temperatures were as follows.

    Examples 1 to 5; Comparative examples 1 to 6: 240°C
    Examples 6 to 8: 280°C
    Examples 9 to 11: 260°C

[Tensile property evaluation test of matrix resin compositions]

The flexural characteristics of test pieces made up of respective matrix resins (thermoplastic resin composition), produced using an injection molding machine, were evaluated in accordance with the test methods in JIS K 7161: 1994: Plastics - Determination of tensile properties.

[Resin proportion (RC: %)]

A resin proportion was calculated from the weight (W1) of the reinforcing-fiber substrate before matrix resin adhesion and the weight (W2) of the FRP molding material after resin adhesion, using the expression below.

$$\text{Resin proportion (RC: \%)} = (W2 - W1)/W2 \times 100$$

W1: weight of reinforcing-fiber substrate before resin adhesion
W2: weight of FRP molding material after resin adhesion

[Glass transition temperature (Tg)]

Respective test pieces having a thickness of 2 m and a diameter of 6 mm were cut out, using a diamond cutter, from molded articles made of each matrix resin produced in the injection molding machine. Each test piece was measured in a range of 25°C to 250°C using a dynamic viscoelasticity measuring device (DMA 7e, by PerkinElmer Inc.) at a temperature rise condition of 5°C/min, and the obtained maximum peak of tan5 was taken as the glass transition point.

[Heat resistance]

The glass transition temperature of each resin composition was evaluated according to a cumulative displacement of a measurement probe at 200°C, in a measurement using a dynamic viscoelasticity measuring device. The cumulative displacement of the measurement probe was deemed to be excellent (OO) when smaller than 0.1 mm, good (O) when smaller than 0.2 mm, and poor (X) when equal to or greater than 0.2 mm.

[Tensile test]

A universal material tester (Model 5582 by Illinois Tool Works Inc.) was used herein. A dumbbell test piece having a total length of 215 mm, a width of 10 mm and a thickness of 4 mm, including a grip portion, was subjected to a tensile test, with 114 mm chuck distance, and at a rate of 50 mm/min. Tensile strength, tensile strain, and tensile modulus were worked out from the obtained stress-strain diagram.

[FRP flexural test]

Mechanical properties (bending strength and flexural modulus) of each obtained metal-FRP composite were measured in accordance with JIS K 7074: 1988, Testing methods for flexural properties of fiber reinforced plastics.
Respective FRP molding materials were laid so that thickness after molding was 1.0 mm, and thermocompression bonding was performed under the conditions given in the examples and comparative examples. Then respective samples of each FRP composite for flexural testing were produced through shaping to a width of 15 mm and a thickness of 60 mm, using a diamond cutter.

[Resin composition-metal shear test: adhesiveness]

Adhesiveness was measured in accordance with JIS K 6850: 1999 Testing methods for strength properties of adhesives in shear by tension loading.
As illustrated in Fig. 1, there were prepared two metal members 2 having been worked to a thickness of 0.4 mm, and a size of width 5 mm × length 60 mm, then respective 10 mm portions from the edges of each metal member 2 were bonded by a film of a resin composition, to produce a shear test sample. The thickness of the resin composition after bonding was 0.2 mm, and the thickness of the FRP molded article was 0.4 mm. Then a shear test sample was produced by sandwiching the resin composition film between end portions of the upper and lower two metal members, and by performing thermocompression bonding of the whole under the conditions given in the examples and comparative examples. The two white arrows in Fig. 1 denote the direction in which tensile load is applied.

[Interfacial shear strength]

Interfacial adhesion between carbon fibers/resin was evaluated in accordance with the micro-droplet method, using a composite material interface characteristic evaluation device (HM410, by TOHEI SANGYO CO., LTD). Specifically, a carbon fiber filament was drawn from a carbon fiber strand and was set in a sample holder. A drop of a respective heat-melted resin composition was formed on the carbon fiber filament, to yield a respective sample for measurement. The obtained sample was set in the device, the drop was clamped between device blades, the carbon fiber filament was caused to travel at a speed of 2 μm/s over the device, and there was measured a maximum pulling load F in the course of pulling of the drop from the carbon fiber filament. The interfacial shear strength τ was calculated in accordance with the expression below. The interfacial shear strength τ of about 10 to 20 drops was measured for each sample, and the average value was worked out.

The resin components that make up the thermoplastic resin composition are as follows.

[Phenoxy resin (A)]

(A-1): Phenotohto YP-50S (bisphenol A type by NIPPON STEEL Chemical & Material Co., Ltd., Tg (DSC method) = 84°C, Mw = 40,000, hydroxyl equivalent = 284 g/eq, melt viscosity at 250°C = 90 Pa·s)

(A-2): equal-amount mixture (Tg (DSC method) = 69°C, hydroxyl equivalent = 270 g/eq) of Phenotohto YP-50S and Phenotohto FX-316 (bisphenol F types, by NIPPON STEEL Chemical & Material Co., Ltd., Tg (DSC method) = 68°C, Mw = 52,000, hydroxyl equivalent = 256 g/eq, melt viscosity at 250°C = 6 Pa·s)

[Polyamide resin (B)]

(B-1): CM1017 (polyamide 6 by Toray Industries, Inc., melting point = 225°C, melt viscosity at 250°C = 125 Pa·s)

(B-2): Leona 1300S (polyamide 66 by Asahi Kasei Corp., melting point = 262°C, melt viscosity at 250°C = 400 Pa·s)

(B-3): Reny 6002 (polyamide MXD by Mitsubishi Engineering-Plastics Corporation, melting point = 243°C, melt viscosity at 250°C = 294 Pa·s)

(B-4): 1030B (polyamide 6 by Ube Industries, Ltd., melting point = 225°C, melt viscosity at 250°C = 3332 Pa·s)

Examples 1 to 11, Comparative examples 1 to 6

Herein respective phenoxy resins (A) and respective polyamide resin (B) were mixed in the ratios given in Table 1, after which melt kneading was carried out using a twin-screw extruder (set temperature: 230°C to 280°C) having a screw diameter of 26 mm, with the screws rotating in the same direction, to form pellets out of the resins.

The obtained pellets were made into respective dumbbell test pieces using a molding machine (molding temperature set range: 200°C to 280°C; molding mold temperature set range: 40°C to 85°C), and physical properties were measured.

Evaluation results of the examples are given in Table 1, and evaluation results of the comparative examples are given in Table 2.

[Table 1]

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Phenoxy resin | Type | A-1 | A-1 | A-1 | A-1 | A-1 | A-1 | A-1 | A-1 | A-1 | A-1 | A-1 |
| | wt% | 90 | 80 | 50 | 30 | 20 | 80 | 50 | 30 | 80 | 50 | 30 |
| Polyamide resin | Type | B-1 | B-1 | B-1 | B-1 | B-1 | B-2 | B-2 | B-2 | B-3 | B-3 | B-3 |
| | wt% | 10 | 20 | 50 | 70 | 80 | 20 | 50 | 70 | 20 | 50 | 70 |
| Melt viscosity | Pa·s | 728 | 1,250 | 361 | 430 | 367 | 753 | 815 | 685 | 897 | 701 | 503 |
| Slope | Pa·s/°C | -130 | -117 | -1,202 | -1,767 | -2,390 | -77 | -1,026 | 2,300 | -72 | -166 | -388 |
| MFR | g/10 min | 13.3 | 12.2 | 22.9 | 26.5 | 30.5 | 25.3 | 22.3 | 33.8 | 14.3 | 17.7 | 17.9 |
| Melt tension | mN | 14.5 | 27.9 | 10.5 | 3.2 | 2.1 | 7.0 | 5.1 | 2.7 | 8.4 | 4.4 | 1.9 |
| Tg | °C | 125 | 125 | 119 | 116 | 115 | 124 | 120 | 114 | 123 | 121 | 115 |
| Heat resistance | | ○ | ○○ | ○○ | ○○ | ○○ | ○○ | ○○ | ○○ | ○○ | ○○ | ○○ |
| Tensile strength | MPa | 71 | 64 | 67 | 84 | 84 | 74 | 80 | 85 | 73 | 94 | 103 |
| Tensile strain | % | 16 | 14 | 75 | 38 | 35 | 13 | 21 | 7 | 11 | 9 | 5 |
| Tensile modulus | GPa | 2.4 | 2.7 | 2.9 | 2.8 | 2.8 | 2.6 | 2.7 | 2.7 | 2.6 | 3.1 | 3.4 |
| Adhesiveness | N/5 mm | 569 | 574 | 513 | 462 | 460 | 561 | 517 | 440 | 565 | 485 | 451 |

[Table 2]

| | | Comp. ex. 1 | Comp. ex. 2 | Coup. ex. 3 | Comp. ex. 4 | Comp. ex. 5 | Comp. ex. 6 |
|---|---|---|---|---|---|---|---|
| Phenoxy resin | Type | A-1 | | A-1 | A-2 | A-2 | A-1 |
| | wt% | 10 | | 100 | 100 | 50 | 50 |
| Polyamide resin | Type | B-1 | B-1 | | | B-1 | B-4 |
| | wt% % | 90 | 100 | | | 50 | 50 |
| Melt viscosity | Pa·s | 295 | 252 | 90 | 12 | 289 | 3,080 |
| Slope | Pa·s/°C | -3,313 | -5,602 | -572 | -740 | -3,087 | -624 |
| MFR | g/10 min | 36.5 | 45.1 | 19.3 | 214 | 19 | 3.5 |
| Melt tension | mN | 1.6 | 1.7 | 5.1 | 1.0 | 7.4 | 19.9 |
| Tg | °C | 85 | 81 | 119 | 97 | 100 | 119 |
| Heat resistance | | ○○ | ○○ | X | X | ○ | ○○ |
| Tensile strength | MPa | 86 | 59.8 | 66 | 76 | 43.5 | 76.5 |
| Tensile strain | % | 30 | 33.9 | 13.3 | 7.8 | 14.3 | 60.3 |
| Tensile modulus | GPa | 2.8 | 2.5 | 2.8 | 2.6 | 2.3 | 2.2 |
| Adhesiveness | N/5 mm | 448 | 450 | 485 | 491 | 521 | 507 |

Examples 12 to 22, Comparative examples 7 to 18

Each phenoxy resin (A) and each polyamide resin (B) were pulverized and classified using a centrifugal dryer/mill, to yield a respective powder having an average particle size D50 of 60 μm, followed by dry blending, at the proportions given in Table 3, using a Henschel mixer.

Then CF cloth A (SA-3203, by SAKAI OVEX Co., Ltd.) being a reinforcing-fiber substrate made up of carbon fibers, CF cloth B (plain-weave substrate produced through fiber-opening of carbon fibers T700, by Toray Industries, Inc.) and CF-UD material (substrate resulting from unidirectional alignment of carbon fibers T700, by Toray Industries, Inc.) were powder-coated with each obtained powdery thermoplastic resin composition, using a lab electrostatic coating device (GX8500, by Nihon Parkerizing Co., Ltd.), under conditions of charge of 70 kV and blowing air pressure of 0.32 MPa. Thereafter, the resin was heat-melted in an oven at 220°C to 270°C for one minute, to elicit heat fusion and fixing to the reinforcing-fiber substrate, and produce a respective CFRP prepreg.

The state of the matrix resin fixed to the reinforcing-fiber substrate was checked by optical microscopy; it was found that the state of the matrix resin exhibited a residual granular feeling derived from agglomeration of a plurality of fine powder particles of resin half-melted on account of heat.

Then various test pieces for physical property evaluation were produced by press-molding the CFRP prepreg A in a heat press machine, at a temperature of 240°C to 280°C, at a pressure of 5 MPa for 10 minutes.

The evaluation results are given in Table 3 for examples, and in Table 4 for comparative examples.

[Table 3]

| | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| Phenoxy resin | Type | A-1 | A-1 | A-1 | A-1 | A-1 | A-1 | A-1 | A-1 | A-1 | A-1 | A-1 |
| | wt% | 90 | 80 | 50 | 30 | 20 | 80 | 50 | 30 | 80 | 50 | 30 |
| Polyamide resin | Type | B-1 | B-1 | B-1 | B-1 | B-1 | B-2 | B-2 | B-2 | B-3 | B-3 | B-3 |
| | wt% | 10 | 20 | 50 | 70 | 80 | 20 | 50 | 70 | 20 | 50 | 70 |
| Fibrous substrate | Type | Cloth A | Cloth A | Cloth A | Cloth A | Cloth A | Cloth A | Cloth A | Cloth A | Cloth A | Cloth A | Cloth A |
| Interfacial shear strength | MPa | 47 | 36 | 35 | | | 38 | 35 | | | | |
| Bending strength | MPa | 637 | 603 | 610 | | | 623 | 614 | | | | |
| Flexural modulus | GPa | 52 | 51 | 48 | | | 54 | 49 | | | | |
| Fibrous substrate | Type | Cloth B | Cloth B | Cloth B | Cloth B | Cloth B | Cloth B | Cloth B | Cloth B | Cloth B | Cloth B | Cloth B |
| Interfacial shear strength | MPa | 48 | 46 | 47 | 38 | 35 | 45 | 43 | 40 | 44 | 43 | 39 |
| Bending strength | MPa | 668 | 645 | 633 | 612 | 609 | 654 | 631 | 613 | 683 | 643 | 623 |
| Flexural modulus | GPa | 72 | 73 | 68 | 75 | 75 | 73 | 72 | 72 | 72 | 71 | 70 |
| Fibrous substrate | Type | UD | UD | UD | UD | UD | UD | UD | UD | UD | UD | UD |
| Bending strength | MPa | 692 | 669 | 629 | 627 | 601 | 680 | 656 | 637 | 710 | 669 | 648 |

EP 3 778 776 A1

14

(continued)

| | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| Flexural modulus | GPa | 74 | 75 | 77 | 77 | 76 | 74 | 77 | 76 | 77 | 77 | 76 |

[Table 4]

| | | Comp. ex. 7 | Comp. ex. 8 | Comp. ex. 9 | Comp. ex. 10 | Comp. ex. 11 | Comp. ex. 12 | Comp. ex. 13 | Comp. ex. 14 | Comp. ex. 15 | Comp. ex. 16 | Comp. ex. 17 | Comp. ex. 18 |
|---|---|---|---|---|---|---|---|---|---|---|---|---|---|
| Phenoxy resin | Type | A-1 | A-1 | A-1 | A-1 | A-1 | A-1 | A-1 | | A-1 | A-2 | A-2 | A-1 |
| | wt% | 30 | 20 | 30 | 80 | 50 | 30 | 10 | | 100 | 100 | 50 | 50 |
| Polyamide resin | Type | B-1 | B-1 | B-2 | B-3 | B-3 | B-3 | B-1 | B-1 | | | B-1 | B-4 |
| | wt% | 70 | 80 | 70 | 20 | 50 | 70 | 90 | 100 | | | 50 | 50 |
| Fibrous substrate | Type | Cloth A | Cloth A | Cloth A | Cloth A | Cloth A | Cloth A | Cloth A | Cloth A | Cloth A | Cloth A | Cloth A | Cloth A |
| Interfacial shear strength | MPa | 33 | 31 | 31 | 34 | 32 | 30 | 31 | 30 | 48 | 50 | 33 | 32 |
| Bending strength | MPa | 428 | 273 | 431 | 596 | 214 | X | X | X | 670 | 618 | 263 | X |
| Flexural modulus | GPa | 42 | 37 | 50 | 54 | 37 | X | X | X | 50 | 49 | 35 | X |
| Fibrous substrate | Type | | | | | | | Cloth B | Cloth B | Cloth B | Cloth B | Cloth B | Cloth B |
| Interfacial shear strength | MPa | | | | | | | 37 | 36 | 46 | 50 | | |
| Bending strength | MPa | | | | | | | 531 | 504 | 677 | 619 | | |
| Flexural modulus | GPa | | | | | | | 71 | 76 | 70 | 70 | | |
| Fibrous substrate | Type | | | | | | | UD | UD | UD | UD | | |
| Bending strength | MPa | | | | | | | 511 | 536 | 635 | 588 | | |
| Flexural modulus | GPa | | | | | | | 74 | 69 | 68 | 69 | | |

(Note) In the tables, the reference symbol X indicates that measurement was impossible.

EP 3 778 776 A1

As Examples 1 to 11 reveal, the resin composition of the present invention exhibits better mechanical properties and adhesiveness, derived from blending of a phenoxy resin and a polyamide resin, than Comparative examples 1 to 6. Further, the melt tension of the resin composition is better than that of the phenoxy resin and the polyamide resin on their own, and the viscosity characteristics of the resin composition at the time of melting are optimized; it is found that, as a result, the FRPs in Examples 12 to 22 obtained by molding of an FRP molding material having the resin composition of the present invention as a matrix resin exhibited better mechanical properties than those of the FRPs produced in Comparative examples 7 to 18.

[Industrial Applicability]

The thermoplastic resin composition of the present invention is useful as a matrix resin of a fiber-reinforced-plastic (FRP) molding material, and affords good impregnation into reinforcing-fiber substrates. Accordingly, the mechanical characteristics of the molded article can be maintained satisfactorily, with unlikely occurrence of defects such as voids, in the interior of the molded article. The thermoplastic resin composition of the present invention can therefore be used as a lightweight, high-strength FRP molding material in a wide range of applications, for instance in the sports/leisure field, automobiles, aircraft and wind power generators.

[Reference Signs List]

1    Resin layer
2    Metal member

**Claims**

1.  A thermoplastic resin composition, which is used as a matrix resin of a fiber-reinforced-plastic molding material, and comprises a phenoxy resin (A) and a polyamide resin (B), wherein
    a mass ratio (A)/(B) of the phenoxy resin (A) and the polyamide resin (B) is 10/90 to 90/10; and melt viscosity in any temperature range from 160°C to 280°C is from 300 Pa·s to 3,000 Pa·s.

2.  The thermoplastic resin composition according to claim 1, wherein a mass-average molecular weight (Mw) of the phenoxy resin (A) is in a range of 10,000 to 200,000.

3.  The thermoplastic resin composition according to claim 1 or 2, wherein a glass transition temperature of the phenoxy resin (A) is 70°C to 160°C.

4.  The thermoplastic resin composition according to any one of claims 1 to 3, wherein the polyamide resin (B) is a fully aliphatic polyamide or a semi-aliphatic polyamide.

5.  The thermoplastic resin composition according to any one of claims 1 to 4, wherein the polyamide resin (B) is polyamide 6.

6.  A fiber-reinforced-plastic molding material, comprising a reinforcing-fiber substrate, a surface of which is at least partially coated with the thermoplastic resin composition of any one of claims 1 to 5, and interfacial shear strength of 35 MPa or higher at an interface with reinforcing fibers, as measured by a micro-droplet method.

7.  The fiber-reinforced-plastic molding material according to claim 6, wherein fibers that make up the reinforcing-fiber substrate include one or two or more types selected from the group consisting of carbon fibers, boron fibers, silicon carbide fibers, glass fibers and aramid fibers.

8.  A fiber-reinforced-plastic molded article, which is obtained by molding the fiber-reinforced-plastic molding material of claim 6 or 7.

[Fig. 1]

## INTERNATIONAL SEARCH REPORT

| International application No. |
| --- |
| PCT/JP2019/014166 |

**A. CLASSIFICATION OF SUBJECT MATTER**
Int.Cl. C08L71/10(2006.01)i, C08J5/24(2006.01)i, C08L7/02(2006.01)i, C08L77/00(2006.01)i

According to International Patent Classification (IPC) or to both national classification and IPC

**B. FIELDS SEARCHED**

Minimum documentation searched (classification system followed by classification symbols)
Int.Cl. C08L, C08J5/24

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2005-154727 A (AJINOMOTO CO., INC.) 16 June 2005, claims & US 2005/0008868 A1 (claims) & TW 200504146 A & KR 10-2004-0101912 A | 1-4, 6-8 |
| Y | JP 2006-321951 A (NITTO SHINKO CORPORATION) 30 November 2006, claims, paragraph [0032] & US 2009/0215968 A1 (claims, paragraph [0068]) & EP 1900777 A1 & CN 101180366 A | 1-4, 6-8 |
| X | JP 3-237160 A (MITSUI SEKIYU KAGAKU KOGYO KABUSHIKI KAISHA) 23 October 1991, claims, page 2, upper right column to lower left column, page 6, upper left column to lower left column, table 2, example 1 (Family: none) | 1-4, 7, 8 |
| Y | | 1-4, 6-8 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 June 2019 (10.06.2019) | 25 June 2019 (25.06.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/014166 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 4-175374 A (DAINIPPON INK AND CHEMICALS, INCORPORATED) 23 June 1992, page 2, upper left column, page 2, lower left column (Family: none) | 1-4, 6-8 |
| Y | WO 2017/038528 A1 (JSR CORPORATION) 09 March 2017, claims, paragraph [0145], example 16 & US 2018/0258239 A1 (claims, paragraphs [0191] [0192], example 16) & EP 3345969 A1 & CN 107922744 A & TW 201714952 A | 6 |
| Y | JP 2011-57798 A (ASAHI KASEI CHEMICALS CORP.) 24 March 2011, claims, paragraph [0002] (Family: none) | 1-4. 7-8 |
| A | JP 2009-127169 A (TORAY INDUSTRIES, INC.) 11 June 2009, entire text (Family: none) | 1-8 |
| A | WO 2009/145224 A1 (PANASONIC ELECTRIC WORKS CO., LTD.) 03 December 2009, entire text & CN 102046726 A | 1-8 |
| A | JP 2011-46782 A (PANASONIC ELECTRIC WORKS CO., LTD.) 10 March 2011, entire text (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017507045 W
- JP 2015129271 A
- JP 2006321951 A
- JP H0411654 B
- JP H03237160 B
- JP S63202655 B